# EUROPEAN PATENT APPLICATION

(11) **EP 4 831 407 A1**
(43) Date of publication of application: **28.10.2026**
(21) Application number: 23962310.1
(22) Date of filing: 18.12.2023
(51) Int. Cl.: E02F 9/22, E02F 5/14

(54) **AUTOMATIC DRIVING ASSISTANCE SYSTEM OF CONSTRUCTION MACHINE AND AUTOMATIC DRIVING ASSISTANCE CONTROL METHOD OF CONSTRUCTION MACHINE**

(71) Applicant: Volvo Construction Equipment AB, 631 85 Eskilstuna (SE)
(72) Inventor: KIM, Jiyun, Changwon-si, Gyeongsangnam-do 51710 (KR)
(74) Representative: Kransell & Wennborg KB
(86) International application number: PCT/KR2023/020844
(87) International publication number: WO 2025/135204

(57) **Abstract**

One aspect of the present disclosure relates to an automatic driving assistance system for a construction machine including an undercarriage, a superstructure rotatably coupled to the undercarriage, and a work device including a boom, an arm, and a bucket mounted on the superstructure, the automatic driving assistance system comprising: a sensor unit that detects attitude information of the construction machine; a driving lever that outputs an electric operating signal corresponding to a worker's operation; a setting unit capable of setting a trench area to be worked on; and an electronic control unit that determines whether a driving assistance mode is operated on the basis of the operating signal outputted from the driving lever, and controls driving of the undercarriage such that the construction machine drives along the set trench area when the driving assistance mode is operated, wherein in the driving assistance mode, the electronic control unit controls driving of the undercarriage such that the construction machine drives less than a length of a trench in which the construction machine can work in place.

## Description

### Technical Field

The present disclosure generally relates to a construction machine. In a specific aspect, the present disclosure relates to an automatic driving assistance system for a construction machine and an automatic driving assistance control method for a construction machine. The present disclosure may be applied to large vehicles, such as trucks, buses, and construction equipment. The present disclosure may be described with respect to a particular vehicle; however, the present disclosure is not limited to any specific vehicle.

### Background

In general, an excavator is a construction machine that performs various tasks at construction sites and the like, including excavation work for digging the ground, loading work for transporting soil, earthwork for forming a foundation, crushing work for demolishing structures, leveling work for arranging the ground surface, and grading work for smoothing the ground surface.

In trench work such as ditch digging, a worker repeatedly performs an operation of excavating the ground to form a trench and an operation of driving the construction machine backward by a certain distance.

To date, trench work has been performed by manual operation, leading to complex processes and inconsistent results depending on the individual worker.

### Summary

According to a first aspect of the present disclosure, there is provided an automatic driving assistance system for a construction machine including an undercarriage, a superstructure rotatably coupled to the undercarriage, and a work device including a boom, an arm, and a bucket mounted on the superstructure, the automatic driving assistance system comprising: a sensor unit that detects attitude information of the construction machine; a driving lever that outputs an electric operating signal corresponding to a worker's operation; a setting unit capable of setting a trench area to be worked on; and an electronic control unit that determines whether a driving assistance mode is operated on the basis of the operating signal outputted from the driving lever, and controls driving of the undercarriage such that the construction machine drives along the set trench area when the driving assistance mode is operated, wherein in the driving assistance mode, the electronic control unit controls driving of the undercarriage such that the construction machine drives less than a length of a trench in which the construction machine can work in place. The technical advantage is that since driving of the undercarriage is controlled such that the construction machine travels a distance less than the length of the trench in which the construction machine can work in place, that is, by the driving limit length, the rear portion of the trench that has already been worked by the construction machine and the front portion of the trench to be subsequently worked have an overlap area equal to the margin, thereby improving the precision of the trench work.

In an embodiment, the length of the trench in which the construction machine can work in place is a length between a first position of a bucket when the work device extends by a certain length and a second position of the bucket when a bottom surface of the bucket is horizontal to the ground.

In an embodiment, the electronic control unit may generate a virtual driving path consisting of one or more straight lines along a centerline of the trench area set by the setting unit.

In an embodiment, the electronic control unit may activate the driving assistance mode when the driving lever is operated such that the construction machine follows the driving path, and deactivate the driving assistance mode when the driving lever is in a neutral position or when the driving lever is operated such that the construction machine does not follow the driving path.

In an embodiment, the electronic control unit may generate the driving path by extending a rear end of the set trench area by a certain length.

In an embodiment, the electronic control unit may align a virtual driving centerline that is parallel to the longitudinal direction of the undercarriage and passes through the center of the working device with the driving path. The technical advantage is that the construction machine is automatically aligned with the trench area and drives backward along the trench area, thereby improving work efficiency.

In an embodiment, the electronic control unit may control the driving of the undercarriage such that an angle between the driving centerline and the driving path is 0.

In an embodiment, the electronic control unit may form a plurality of points at regular intervals on the virtual driving path.

In an embodiment, the electronic control unit may generate a driving end reference line extending forward by a certain length while passing through the center of the working device.

In an embodiment, the electronic control unit may change the direction of the construction machine when the end of the driving end reference line is located at a point where the direction of the driving path changes, and may terminate the driving assistance mode of the construction machine when the end of the driving end reference line is located at the final point of the driving path.

According to a second aspect of the present disclosure, there is provided an automatic driving assistance control method for a construction machine including an undercarriage, a superstructure rotatably coupled to the undercarriage, and a work device including a boom, an arm, and a bucket mounted on the superstructure, the method including steps of: generating a virtual driving path consisting of one or more straight lines along a centerline of a trench area set by a worker (S10); driving the undercarriage to align a virtual driving centerline, which is parallel to a longitudinal direction of the undercarriage and passes through the center of the work device, with the driving path (S20); and determining whether a driving assistance mode is operated based on an operating signal output from a driving lever, and when the driving assistance mode is operated, controlling driving of the undercarriage such that the construction machine drives less than a length of a trench in which the construction machine can work in place (S30).

In an embodiment, in step S10, a plurality of points may be formed at regular intervals on the virtual driving path.

In an embodiment, in step S20, the driving of the undercarriage may be controlled such that the angle between the driving centerline and the driving path is 0.

In an embodiment, the method may further include changing a direction of the construction machine when an end of a driving end reference line, which passes through the center of the work device and extends forward by a certain length, is positioned at a point where the direction of the driving path changes (S40).

In an embodiment, the method may further include terminating the driving assistance mode when an end of a driving end reference line, which passes through the center of the work device and extends forward by a certain length, is located at a final point of the driving path (S50).

The above and following aspects, appended claims, and/or examples disclosed herein may be appropriately combined with one another, as will be apparent to those skilled in the art.

Additional features and advantages are set forth in the following description, claims, and drawings, and will in part be readily apparent to those skilled in the art from this disclosure or will be recognized by practicing the disclosure as described herein.

### Brief Description of the Drawings

Aspects of the present disclosure will be more clearly understood from the following detailed description taken in conjunction with the accompanying drawings in which:
FIG. 1 is a perspective view of a construction machine according to an embodiment of the present invention;
FIG. 2 is a diagram for describing a bucket depth of a construction machine according to an embodiment of the present invention;
FIG. 3 is a block diagram illustrating the basic configuration of an automatic driving assistance system for a construction machine according to an embodiment of the present invention;
FIG. 4 is a schematic diagram illustrating the overall configuration of an automatic driving assistance system for a construction machine according to an embodiment of the present invention;
FIG. 5 is a block diagram of an electronic control unit;
FIG. 6 is a schematic diagram illustrating a method of generating a virtual driving path based on a set trench area;
FIG. 7 is a schematic diagram illustrating a driving centerline of a construction machine;
FIG. 8 is a schematic diagram illustrating a state in which a driving centerline of a construction machine is not aligned with a virtual driving path generated in FIG. 6;
FIG. 9 is a schematic diagram illustrating a state in which a construction machine performs trench work in place;
FIGS. 10A to 10E are schematic diagrams of a construction machine driving along a virtual driving path generated in FIG. 6; and
FIG. 11 is a flowchart illustrating an automatic driving assistance control method for a construction machine.

### Detailed Description

The aspects described below represent information necessary to enable those skilled in the art to practice the present disclosure.

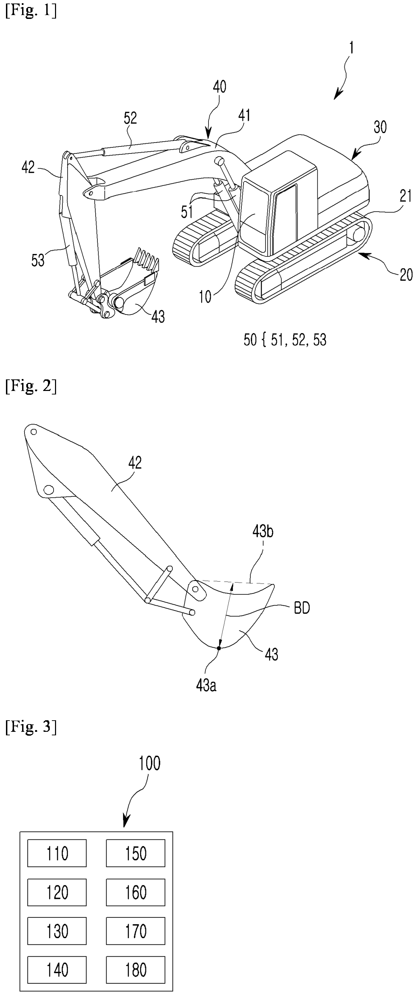

FIG. 1 is a perspective view of a construction machine according to an embodiment of the present invention.

Referring to FIG. 1, a construction machine 1, such as an excavator, includes a cab 10, an undercarriage 20, a superstructure 30 rotatably installed on the undercarriage 20, and a work device 40 and a hydraulic actuator 50 installed on the superstructure 30 so as to be operable in a vertical direction.

The undercarriage 20 may be of, for example, a crawler or wheel type. For example, the construction machine 1 may travel forward or backward depending on the driving direction of tracks 21 or wheels.

The work device 40 formed as a multi-joint structure includes a boom 41 having a rear end rotatably supported on the superstructure 30, an arm 42 having a rear end rotatably supported at a distal end of the boom 41, and a bucket 43 rotatably installed at a distal end side of the arm 42.

The hydraulic actuator 50 includes a boom actuator 51, an arm actuator 52, and a bucket actuator 53. Furthermore, when hydraulic fluid is supplied in response to the operation of a worker's operation lever, the boom actuator 51, the arm actuator 52, and the bucket actuator 53 operate the boom 41, the arm 42, and the bucket 43, respectively.

FIG. 2 is a diagram for describing a bucket depth of a construction machine according to an embodiment of the present invention.

A bucket depth BD may be defined as the shortest distance between an apex 43a and an excavation plane 43b of the bucket 43. The excavation plane 43b may be defined as a plane defined by joining four corners of the bucket 43 opposite to the apex 43a. The bucket depth BD may be used to determine a margin value to be described below.

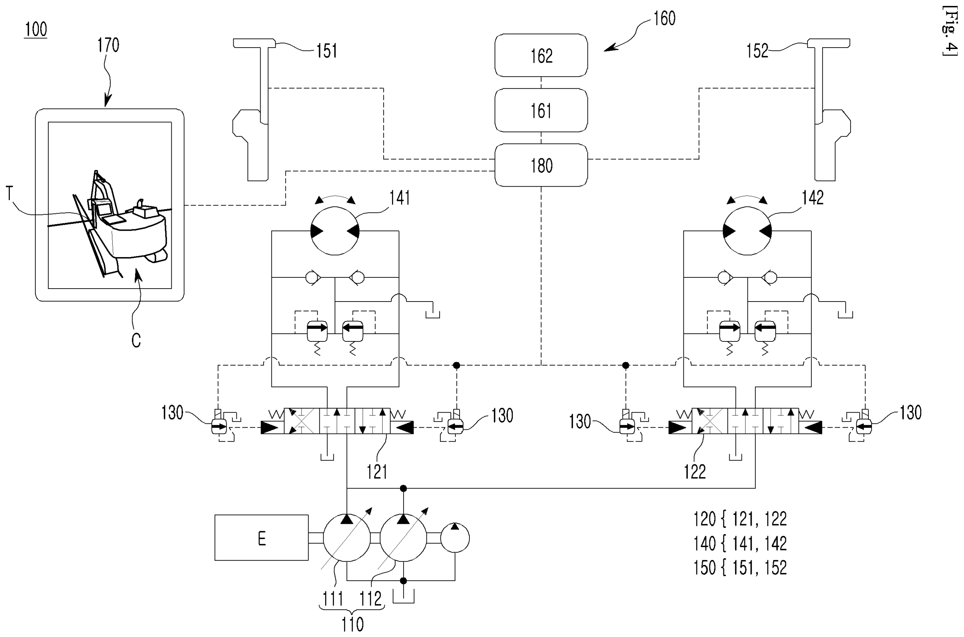

FIG. 3 is a block diagram illustrating the basic configuration of an automatic driving assistance system for a construction machine according to an embodiment of the present invention, and FIG. 4 is a schematic diagram illustrating the overall configuration of an automatic driving assistance system for a construction machine according to an embodiment of the present invention.

Referring to FIGS. 3 and 4, an automatic driving assistance system 100 of a construction machine may include a hydraulic pump 110, a control valve unit 120, an electronic proportional pressure reducing valve 130, a driving motor 140, a driving lever 150, a sensor unit 160, a setting unit 170, and an electronic control unit 180.

The hydraulic pump 110 is driven by an engine E and discharges high-pressure hydraulic fluid to operate the driving motor 140. The hydraulic pump 110 may include first and second hydraulic pumps 111 and 112.

The control valve unit 120, which is a member that opens and closes a flow path via a spool moving in an axial direction upon receiving hydraulic pressure of the hydraulic fluid discharged from the hydraulic pump 110, may include a first control valve 121 and a second control valve 122 that operate the first driving motor 141 and the second driving motor 142, respectively. In addition, the control valve unit 120 may also include a control valve that controls a boom actuator, an arm actuator, a bucket actuator, and the like.

The control valve unit 120 is connected to the hydraulic pump 110 through a hydraulic line and guides the supply of hydraulic fluid from the hydraulic pump 110 to the driving motor 140. A pilot signal pressure generated when the first driving lever 151 is operated may be applied to the spool of the first control valve 121. Similarly, a pilot signal pressure generated when the second driving lever 152 is operated may be applied to the spool of the second control valve 122.

The electronic proportional pressure reducing valve 130 is an electronically operated valve that generates a pilot signal pressure proportional to the intensity of a control signal applied by the electronic control unit 180, for example, the intensity of a current, wherein the generated pilot signal pressure is transmitted to the control valve unit 120. The pilot signal pressure from the electronic proportional pressure reducing valve 130 causes the spool within the control valve unit 120 to move axially.

The driving motor 140 is operated by the hydraulic fluid provided from the hydraulic pump 110. The driving motor 140 may be provided with a first driving motor 141 and a second driving motor 142. The driving motor 140 may rotate in a forward direction or a reverse direction depending on the flow direction of the hydraulic fluid. When the rotational direction of the driving motors 141 and 142 is in the forward direction, the construction machine may perform forward travel, and when the rotational direction of the driving motors 141 and 142 is in the reverse direction, the construction machine may perform reverse travel.

The driving lever 150 is provided with a first driving lever 151 and a second driving lever 152 to operate the first driving motor 141 and the second driving motor 142.

When the first driving lever 151 and the second driving lever 152 are pushed forward simultaneously, the construction machine travels forward. Conversely, when the first driving lever 151 and the second driving lever 152 are pulled backward simultaneously, the construction machine travels backward. Moreover, when only one of the first driving lever 151 and the second driving lever 152 is operated, the construction machine turns to the right or left.

The sensor unit 160 may include a global navigation satellite system (GNSS) sensor 161 and an attitude measurement sensor 162.

The GNSS sensor 161 may detect the current position and attitude of the construction machine in real time. Specifically, the GNSS sensor 161 may measure the current latitude, longitude, and altitude of the construction machine in real time, thereby detecting the current position of the construction machine in real time. In addition, the GNSS sensor 161 may detect the current attitude of the construction machine in real time. The real time information about the current position and attitude of the construction machine detected by the GNSS sensor 161 may be digital data.

The attitude measurement sensor 162 may measure the displacement, attitude, and/or angle of the superstructure, the boom, the arm, and the bucket using an inertial measurement unit (IMU), an angle sensor, and the like. For example, the attitude measurement sensor 162 may be disposed on each of the superstructure, the boom, the arm, and the bucket to detect the displacement, attitude, and/or angle of each of the superstructure, the boom, the arm, and the bucket.

The information measured by the sensor unit 160 is provided to the electronic control unit 180.

The setting unit 170 may include a display provided inside the worker's cab, which allows the worker to set a trench area of the construction machine. Preferably, the setting unit 170 may display both the trench area T set by the worker and real time information C regarding the current position and attitude of the construction machine detected by the sensor unit 160.

A button for activating a driving assistance mode may be displayed on the display of the setting unit 170, and the worker may push the button to turn on or off the activation of the driving assistance mode. However, the button on the display may also be configured as a switch.

In addition, information indicating whether the driving assistance mode is operated and information about the path being tracked by the construction machine may be displayed on the setting unit 170.

Furthermore, the electronic control unit 180 determines whether the driving assistance mode is operated based on an operating signal output from the driving lever 150, and when the driving assistance mode is operated, the electronic control unit 180 generates an electrical signal to cause the construction machine to travel along the set trench area and outputs the electrical signal to the electronic proportional pressure reducing valve 130. The electronic proportional pressure reducing valves 130 may move spools of the control valve unit 120 according to the intensity of the applied pilot signal pressure, by supplying a pilot signal pressure proportional to the intensity of the current applied by the electronic control unit 180 to each of the spools of the control valve unit 120. That is, the electronic control unit 180 controls the driving of the driving motor 140, that is, the driving of the undercarriage, based on the operating signal output from the driving lever 150.

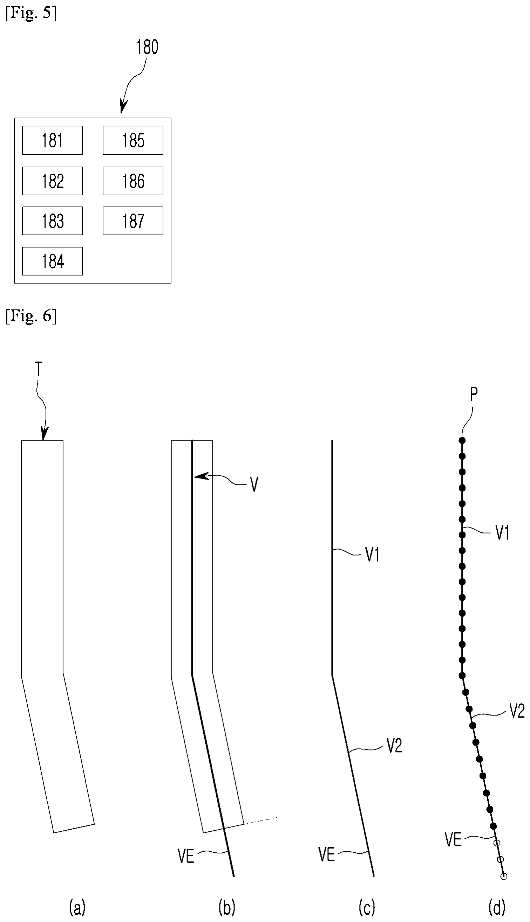

FIG. 5 is a block diagram of an electronic control unit.

Referring to FIG. 5, the electronic control unit 180 may include a data receiving unit 181, a storage unit 182, a path generating unit 183, a path aligning unit 184, a driving control unit 185, an excavation control unit 186, and an output unit 187.

The data receiving unit 181 may receive information detected by the sensor unit. The data receiving unit 181 may receive digital data in real time, such as the current latitude, longitude, altitude, and current attitude of the unmanned excavator detected by the GNSS sensor, the position and/or attitude of the superstructure, the boom, the arm, and the bucket detected by the attitude measurement sensor, and the body tilt of the construction machine.

The data receiving unit 181 may receive information about the trench area set by the setting unit and information about whether the driving assistance mode is activated.

The storage unit 182 may store information regarding a first set length, a driving limit length, a third set length, and a margin value. Additionally, the storage unit 182 may store the bucket depth that serves as a reference for the margin value.

The storage unit 182 may store information about a driving end reference line that passes through the center of the work device and extends to a second position of the bucket where the bottom surface of the bucket is horizontal to the ground.

FIG. 6 is a schematic diagram illustrating a method of generating a virtual driving path based on a set trench area.

Hereinafter, a process of generating a virtual driving path will be described in more detail with reference to FIGS. 5 and 6.

The path generating unit 183 generates a virtual driving path V based on the trench area T set by the setting unit.

The path generating unit 183 generates the virtual driving path V consisting of one or more straight lines along the centerline of the trench area T. However, it is not limited thereto. The virtual driving path may also include curves.

When the trench area T is input through the setting unit, the path generating unit 183 converts the same into a straight line V along the centerline of the trench area T, as shown in FIG. 6(b). For example, when the direction of the trench area T shown in FIG. 6 changes midway, the virtual driving path V consisting of two straight lines V1 and V2 is generated, as shown in FIG. 6(c).

In an embodiment, the path generating unit 183 may extend the rear end of the trench area T by a certain length to generate the virtual driving path V. An extended path VE shown in FIG. 6(b) is a configuration for terminating the driving assistance mode once the construction machine moves a certain distance away from the worked trench. The extended path VE may have a first set length to be described below, but is not limited thereto. In addition, the extended path VE may be omitted in some cases.

The path generating unit 183 may form a plurality of points P at regular intervals along the virtual driving path V. These points may serve as reference points when starting trench work, changing the direction of the construction machine, or determining the termination of the driving assistance mode. The points located on the extended path VE are indicated as white dots to distinguish the same from previous points.

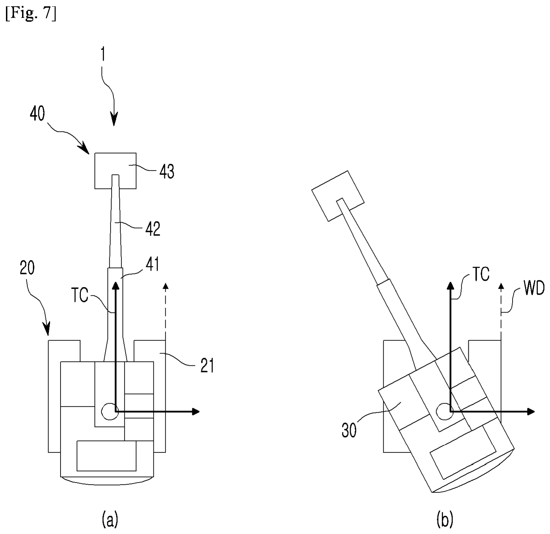

FIG. 7 is a schematic diagram illustrating a driving centerline of a construction machine.

Referring to FIGS. 5 and 7, the path aligning unit 184 controls driving of the undercarriage such that the driving centerline of the construction machine is aligned with the virtual driving path V generated by the path generating unit 183.

The path aligning unit 184 may generate the driving centerline TC.

Specifically, the path aligning unit 184 may generate the virtual driving centerline TC that is parallel to a longitudinal direction WD of the tracks 21 of the undercarriage 20 and passes through the centers of the boom 41, the arm 42, and the bucket 43 when the work device 40 is in a home position. However, it is not limited thereto. The driving centerline TC may be received from the sensor unit.

Generally, the work device 40 is not located at the center of the construction machine 1 but is biased to one side. Thus, the driving centerline TC may not coincide with the center of the construction machine 1.

Referring to FIG. 7(b), since the driving centerline TC is parallel to the longitudinal direction WD of the tracks 21 of the undercarriage 20, it always faces forward regardless of any swing of the superstructure 30.

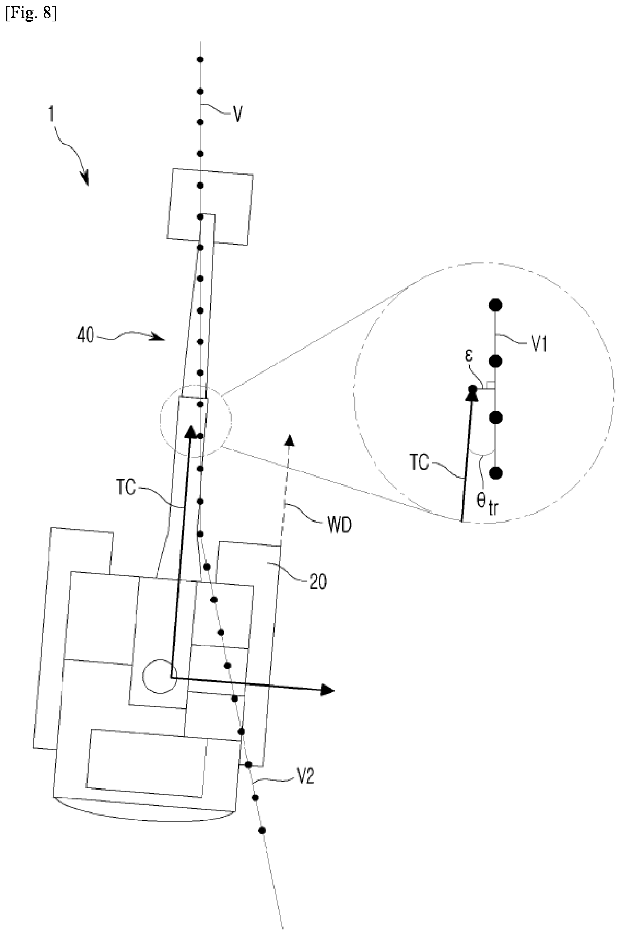

FIG. 8 is a schematic diagram illustrating a state in which a driving centerline of a construction machine is not aligned with a virtual driving path.

Generally, during trench work, the worker repeats the tasks of excavating the ground to form a trench and traveling backward by a certain distance. Since most trenches are linear, the trench work becomes complex when the driving centerline TC is not aligned with the virtual driving path V as shown in FIG. 8.

Referring to FIGS. 5 and 8, the path aligning unit 184 controls the driving of the undercarriage 20 such that the driving centerline TC of the construction machine 1 is aligned with the driving path V generated by the path generating unit 183.

The path aligning unit 184 may calculate a residual angle θ*ₜᵣ* and a lateral error ε between the driving centerline TC and the virtual driving path V1, and controls the driving of the undercarriage 20 to minimize the residual angle θ*ₜᵣ* and the lateral error ε. Specifically, the path aligning unit 184 may calculate pilot signal pressures for controlling the driving of the first driving motor and the second driving motor.

Accordingly, the amount of hydraulic fluid supplied to the first driving motor and the second driving motor is adjusted, such that the residual angle θ*ₜᵣ* and the lateral error ε between the driving centerline TC and the driving path V may become 0. That is, the driving centerline TC may be aligned with the driving path V.

The path aligning unit 184 first aligns the driving centerline TC with the driving path V1, and aligns the driving centerline TC with the driving path V2 after the trench work on the driving path V1 is completed.

The path aligning unit 184 determines whether to align the driving centerline TC with the driving path V based on an operating signal output from the driving lever or an activation signal of the driving assistance mode output from the setting unit.

The driving control unit 185 determines whether the driving assistance mode is operated based on the operating signal output from the driving lever.

In this regard, as described above, when the first and second driving levers are pulled backward simultaneously, the construction machine travels backward. However, when only one of the first and second driving levers is operated, the construction machine turns to the right or left.

When the first and second driving levers are pulled backward simultaneously, the driving control unit 185 determines that there is an intention to drive along the driving path and activates the driving assistance mode.

However, when only one of the first and second driving levers is operated, the driving control unit 185 determines that there is no intention to drive along the driving path and deactivates the driving assistance mode.

In an embodiment, the driving control unit 185 stores, in the storage unit 182, a front end point of the trench area when the driving assistance mode is deactivated, and subsequently controls the driving of the undercarriage such that the bucket is aligned with the corresponding point once the construction machine is aligned again with the driving path.

During trench work, the worker repeatedly performs the tasks of forming a trench and driving the construction machine backward. At this time, in a rear portion of the worked trench, soil that has flowed down during an excavation or dumping process may be partially accumulated.

Therefore, the driving control unit 185 controls driving of the undercarriage such that the construction machine drives less than a first set length when the driving assistance mode is operated. The first set length is related to a length of a trench that the construction machine can form in place.

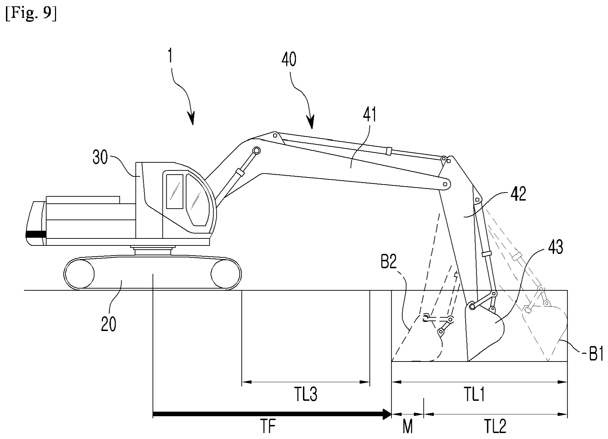

FIG. 9 is a schematic diagram illustrating a state in which a construction machine performs trench work in place.

Specifically, referring to FIGS. 5 and 9, a first set length TL1 may be a maximum length between a first position B1 of the bucket 43 when the work device 40 is extended by a certain length and a second position B2 of the bucket 43 when the bottom surface of the bucket 43 is horizontal to the ground. That is, the first set length TL1 may be a length between the position of the apex of the bucket 43 when the bucket 43 is at the first position B1 and the position of the tip of the bucket 43 when the bucket 43 is at the second position B2.

The first set length TL1 may vary depending on the specifications of the construction machine 1, and its value may be stored in the storage unit 182.

In an embodiment, the driving control unit 185 controls driving of the undercarriage 20 such that the construction machine 1 drives less than the first set length, that is, by the driving limit length TL2, when the driving assistance mode is operated. Specifically, the driving control unit 185 may calculate pilot signal pressures for controlling the driving of the first driving motor and the second driving motor.

The driving limit length TL2 may be defined as a value obtained by subtracting a margin M from the first set length TL1. As such, when the construction machine 1 drives less than the first set length TL1 by the driving control unit 185, and preferably by the driving limit length TL2, an overlap area equal to the margin M is formed between the rear portion of the trench already worked by the construction machine 1 and the front portion of the trench to be subsequently worked by the construction machine 1. As a result, when working on the subsequent trench area, the rear portion of the previous trench may be worked once more, thereby improving the precision of the trenching operation.

In an embodiment, the margin may be set to 50% to 80% of the bucket depth, but is not limited thereto.

When the undercarriage 20 drives by the driving limit length TL2, the control unit 185 notifies the worker of this through the setting unit, and controls the undercarriage 20 to stop.

In an embodiment, the driving control unit 185 may generate the driving end reference line TF that extends to the tip of the bucket 43 when the bucket 43 is in the second position B2. Specifically, the driving control unit 185 terminates the driving assistance mode when the final point of the driving path is located at the front tip of the driving end reference line TF.

In an embodiment, the driving control unit 185 may control the driving of the undercarriage 20 and the work device 40 such that the bucket 43 is positioned at a point located rearward, by the distance TL2 driven by the construction machine 1, from the front end point of the previous trench area. Specifically, the undercarriage 20 and the work device 40 may be driven such that the bucket 43 is positioned at a new point in the attitude of the first position B1.

The excavation control unit 186 may control the driving of the construction machine 1 such that a trench is formed by the first set length TL1 when the excavation assistance mode is operated. Specifically, the excavation control unit 186 may calculate a pilot signal pressure for controlling the driving of the hydraulic actuator of the work device. However, this is not limited thereto. The worker may also perform trench work directly by operating the control lever without the excavation assist mode.

The excavation control unit 186 may determine whether the excavation assistance mode is operated based on the operating signal output from the worker's operation lever.

In an embodiment, the driving control unit 185 and/or the excavation control unit 186 may control the driving of the undercarriage 20 and/or the work device 40 such that the tip of the bucket 43 at the second position B2 is spaced apart from the front of the undercarriage 20 by at least a third set length TL3. This is to prevent the work device 40 from colliding with the undercarriage 20 and the superstructure 30.

Referring to FIGS. 4 and 5, the output unit 187 may generate a control signal, for example, a current, corresponding to the operation received from the driving levers 151 and 152 and may apply the control signal to the electronic proportional pressure reducing valve 130.

The output unit 187 may generate a current corresponding to the pilot signal pressure calculated by the path aligning unit 184 and apply the current to the electronic proportional pressure reducing valve 130 of each of the control valves 121 and 122. Accordingly, the amount of hydraulic fluid supplied to the first and second driving motors 141 and 142 may be controlled, thereby controlling the driving of the undercarriage.

The output unit 187 may generate a current corresponding to the pilot signal pressure calculated by the driving control unit 185 and apply the current to the electronic proportional pressure reducing valve 130 of each of the control valves 121 and 122. Accordingly, the amount of hydraulic fluid supplied to the first and second driving motors 141 and 142 may be controlled, thereby controlling the driving of the undercarriage.

The output unit 187 may generate a current corresponding to the pilot signal pressure calculated by the excavation control unit 186 and apply the current to the electronic proportional pressure reducing valve of the control valve of the work device. Accordingly, the amount of hydraulic fluid supplied to the hydraulic actuator of the work device may be controlled, thereby controlling the driving of the work device.

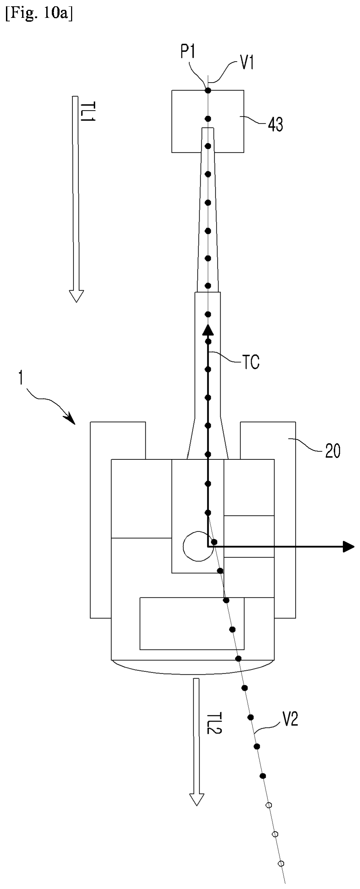

FIGS. 10A to 10E are schematic diagrams of a construction machine driving along the virtual driving path generated in FIG. 6.

Hereinafter, a process in which the construction machine drives along the virtual driving path will be described in detail with reference to FIGS. 5 and 10A to 10E. In this embodiment, it is assumed that the construction machine performs trench work by a first set length at each position.

Referring to FIGS. 5 and 10A, the construction machine 1 has its driving centerline TC aligned with the first driving path V1 generated by the path generating unit 183, and the bucket 43 is positioned at the point P1 of the front end of the first driving path V1 by the driving control unit 185.

When the trench is worked by the first set length TL1 by the worker or the excavation control unit 186, and the worker pulls the first and second driving levers backward simultaneously to operate the driving assistance mode, the driving control unit 185 drives the undercarriage 20 to move the construction machine 1 backward along the virtual driving path V1. When the construction machine 1 moves by the driving limit length TL2, the driving control unit 185 notifies the worker of this through the setting unit and stops driving of the undercarriage 20.

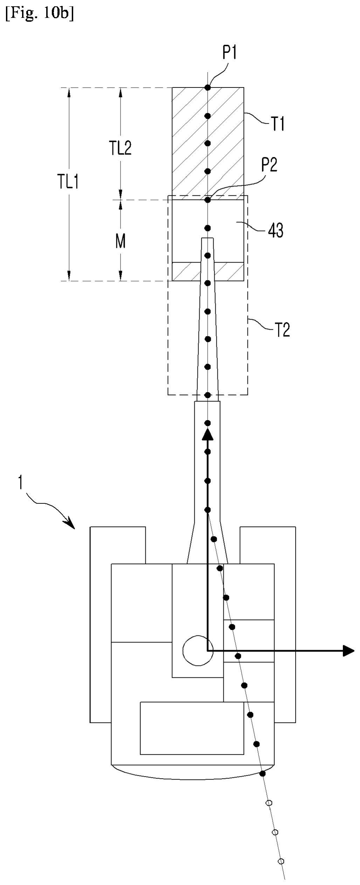

Referring to FIG. 10B, the bucket 43 of the construction machine 1 is aligned with a new starting point P2 by the driving control unit 185, which is moved backward by the driving limit length TL2 from the previous starting point P1. Since the construction machine 1 has moved by a distance obtained by subtracting the margin M from the first set length TL1, that is, the driving limit length TL2, the bucket 43 of the construction machine 1 is aligned with the new starting point P2 located within the already worked trench area T1. The rear portion of the already worked trench area T1 of the construction machine 1 and the front portion of the subsequent trench area T2 to be worked by the construction machine 1 have an overlapping area corresponding to the margin M. This allows the worker to excavate the rear portion of the previous trench area T1 again.

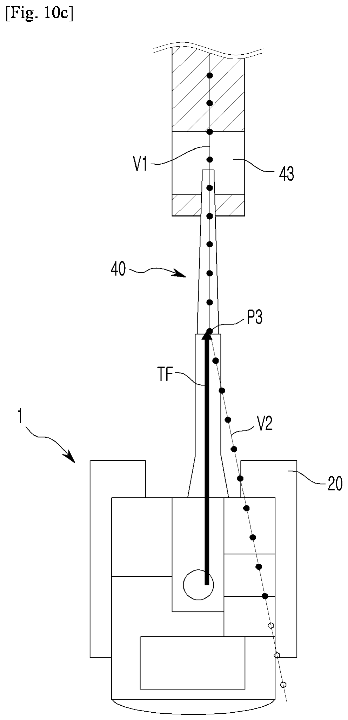

FIG. 10C shows a state in which the tip of the driving end reference line of the construction machine is located at the tip point of the first driving path.

When the tip of the driving end reference line TF is located at the point P3 where a direction is changed between the first driving path V1 and the second driving path V2, the driving assistance mode is terminated.

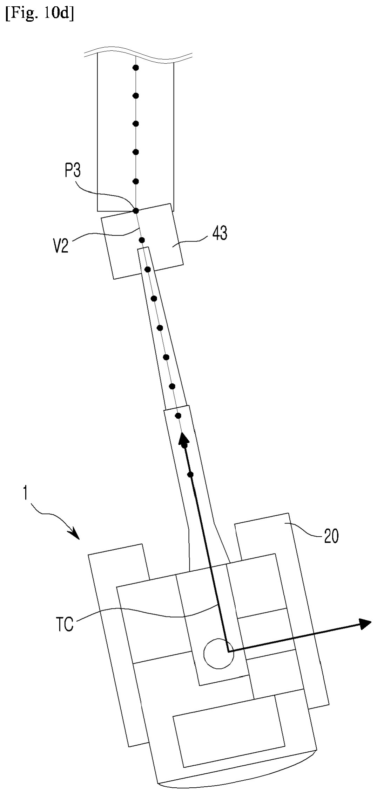

Subsequently, referring to FIG. 10D, when the trench is formed by the worker or the excavation control unit 186 to the point P3, the path aligning unit 184 controls the driving of the undercarriage 20 such that the driving centerline TC is aligned with the driving path V2. The bucket 43 of the construction machine 1 is aligned with the point P3 by the driving control unit 185, and the trench work is restarted by the worker or the excavation control unit 186.

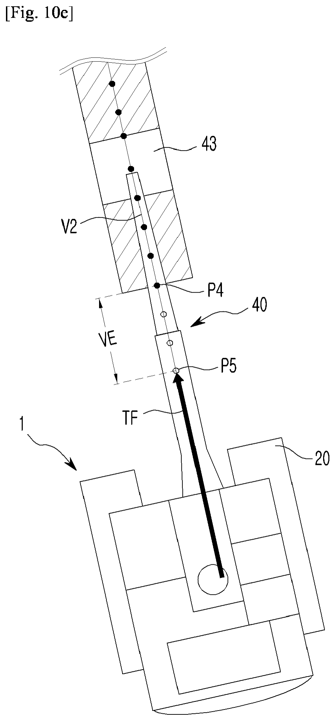

FIG. 10E shows a state in which the tip of the driving end reference line of the construction machine is located at the tip point of the second driving path.

Since the tip of the driving end reference line TF is located at the final point P5 of the extended path VE, the driving assistance mode is terminated. However, this is not limited thereto. The driving assistance mode may be terminated even when the tip of the driving end reference line TF is located at the final point P4 of the second driving path V2.

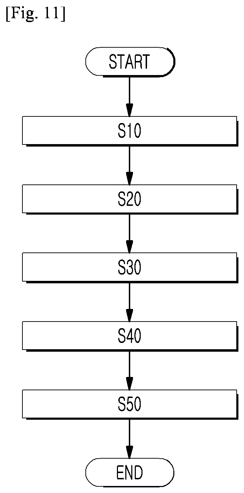

FIG. 11 is a flowchart illustrating an automatic driving assistance control method for a construction machine.

Hereinafter, the automatic driving assistance control method for the construction machine according to an embodiment of the present invention is described.

Referring to FIG. 6 and FIG. 11, the automatic driving assistance control method for the construction machine includes generating the virtual driving path V consisting of one or more straight lines V1 and V2 along the driving centerline of the trench area T set by the worker (S10). In step S10, a plurality of points P at regular intervals may be formed on the virtual driving path V.

Referring to FIGS. 8 and 11, the automatic driving assistance control method for the construction machine includes aligning the virtual driving centerline TC, which is parallel to the longitudinal direction WD of the undercarriage 20 and passes through the center of the work device 40, with the virtual driving path V (S20). In step S20, the driving of the undercarriage 20 may be controlled such that the angle between the virtual driving centerline TC and the virtual driving path V is 0.

Referring to FIG. 10A and FIG. 11, the automatic driving assistance control method for the construction machine includes determining whether the driving assistance mode is operated based on the operating signal output from the driving lever, and when the driving assistance mode is operated, controlling the driving of the undercarriage 20 such that the construction machine 1 drives along the virtual driving paths V1 and V2 by a distance less than the length TL1 of the trench in which the construction machine can work in place, that is, by the driving limit length TL2 (S30).

Referring to FIGS. 10C and 11, the automatic driving assistance control method for the construction machine may include changing the direction of the construction machine 1 when the end of the driving end reference line TF, which passes through the center of the work device 40 and extends forward by a certain length, is located at the point P3 where the direction of the driving paths V1 and V2 changes (S40).

Referring to FIG. 10E and FIG. 11, the automatic driving assistance control method for the construction machine may further include terminating the driving assistance mode when the end of the driving end reference line TF, which passes through the center of the work device 40 and extends forward by a certain length, is located at the final points P4 and P5 of the driving paths V2 and VE (S50).

Through the automatic driving assistance system for the construction machine and the automatic driving assistance control method for the construction machine described above, the construction machine is automatically aligned with the trench area and drives backward along the trench area, thereby improving work efficiency.

Furthermore, since the driving of the undercarriage is controlled such that the construction machine drives less than the length of the trench in which the construction machine can work in place, that is, by the driving limit length, the rear portion of the trench that has already been worked by the construction machine and the front portion of the trench to be subsequently worked have an overlap area equal to the margin, thereby improving the precision of the trench work.

The terminology used herein is employed solely to describe specific aspects and is not intended to limit the present disclosure. As used herein, the singular forms "a," "an," and "the" are intended to include the plural forms unless the context clearly indicates otherwise. As used herein, the term "and/or" encompasses any and all possible combinations of one or more of the associated listed items. As used herein, the terms "comprises," "comprising," "includes," and/or "including" specify the presence of the stated functions, integers, steps, operations, elements, and/or components, but are understood not to exclude the presence or addition of one or more other functions, integers, steps, operations, elements, components, and/or groups thereof.

Although terms such as first and second may be used herein to describe various components, it is to be understood that these components are not limited by these terms. These terms are used solely to distinguish one element from another. For example, without departing from the scope of the present disclosure, the first component may be referred to as the second component, and similarly, the second component may be referred to as the first component.

Relative terms such as "below," "above," "upper side," "lower side," "horizontal," and "vertical" may be used herein to describe the relationship between one element and another as illustrated in the drawings. It should be understood that these terms, along with the terms discussed above, are intended to include different directions of the apparatus in addition to the directions illustrated in the drawings. When an element is described as being "connected" or "coupled" to another element, it is to be understood that the element may be directly connected or coupled to the other element, or may be connected or coupled via one or more intervening elements. In contrast, when an element is described as "directly connected" or "directly coupled" to another element, no intervening element exists therebetween.

Unless otherwise defined, all terms used herein (including technical and scientific terms) have the same meaning as commonly understood by those of ordinary skill in the art to which the present disclosure pertains. Additionally, the terms used herein are to be interpreted as having meanings consistent with their meanings in the context of this specification and the related art, and unless explicitly defined herein, are not to be construed in an idealized or overly formal manner.

## Claims

1. An automatic driving assistance system for a construction machine, the construction machine including an undercarriage, a superstructure rotatably coupled to the undercarriage, and a work device mounted on the superstructure and including a boom, an arm, and a bucket, the system comprising:
a sensor unit that detects attitude information of the construction machine;
a driving lever that outputs an electric operating signal corresponding to a worker's operation;
a setting unit capable of setting a trench area to be worked on; and
an electronic control unit that determines whether a driving assistance mode is operated on the basis of an operating signal output from the driving lever, and controls driving of the undercarriage such that the construction machine drives along the set trench area when the driving assistance mode is operated,
wherein, in the driving assistance mode, the electronic control unit
controls driving of the undercarriage such that the construction machine drives less than a length of a trench in which the construction machine can work in place.

2. The system of claim 1, wherein the length of the trench in which the construction machine can work in place is a length between a first position of a bucket when the work device extends by a certain length and a second position of the bucket when a bottom surface of the bucket is horizontal to the ground.

3. The system of claim 1, wherein the electronic control unit generates a virtual driving path consisting of one or more straight lines along a centerline of the trench area set by the setting unit.

4. The system of claim 3, wherein the electronic control unit activates the driving assistance mode when the driving lever is operated such that the construction machine follows the driving path, and deactivates the driving assistance mode when the driving lever is in a neutral position or when the driving lever is operated such that the construction machine does not follow the driving path.

5. The system of claim 3, wherein the electronic control unit generates the driving path by extending a rear end of the set trench area by a certain length.

6. The system of claim 3, wherein electronic control unit aligns a virtual driving centerline, which is parallel to a longitudinal direction of the undercarriage and passes through the center of the work device, with the driving path.

7. The system of claim 6, wherein the electronic control unit controls driving of the undercarriage such that an angle between the driving centerline and the driving path is 0.

8. The system of claim 3, wherein the electronic control unit forms a plurality of points at regular intervals on the driving path.

9. The system of claim 8, wherein the electronic control unit generates a driving end reference line extending forward by a certain length while passing through the center of the work device.

10. The system of claim 9, wherein the electronic control unit changes the direction of the construction machine when an end of the driving end reference line is positioned at a point where the direction of the driving path is changed, and terminates the driving assistance mode of the construction machine when the end of the driving end reference line is located at a final point of the driving path.

11. An automatic driving assistance control method for a construction machine including an undercarriage, a superstructure rotatably coupled to the undercarriage, and a work device including a boom, an arm, and a bucket mounted on the superstructure, the method comprising steps of:
generating a virtual driving path consisting of one or more straight lines along a centerline of a trench area set by a worker (S10);
driving the undercarriage to align a virtual driving centerline, which is parallel to a longitudinal direction of the undercarriage and passes through the center of the work device, with the driving path (S20); and
determining whether a driving assistance mode is operated based on an operating signal output from a driving lever, and when the driving assistance mode is operated, controlling driving of the undercarriage such that the construction machine drives less than a length of a trench in which the construction machine can work in place (S30).

12. The method of claim 11, wherein, in step S10, a plurality of points are formed at regular intervals on the virtual driving path.

13. The method of claim 11, wherein, in step S20, the driving of the undercarriage is controlled such that an angle between the driving centerline and the driving path is 0.

14. The method of claim 12, further comprising changing a direction of the construction machine when an end of a driving end reference line, which passes through the center of the work device and extends forward by a certain length, is positioned at a point where the direction of the driving path changes (S40).

15. The method of claim 12, further comprising terminating the driving assistance mode when an end of a driving end reference line, which passes through the center of the work device and extends forward by a certain length, is located at a final point of the driving path (S50).
